(19) **Europäisches Patentamt / European Patent Office / Office européen des brevets**

(11) **EP 2 827 171 A1**

(12) # EUROPEAN PATENT APPLICATION

(43) Date of publication:
**21.01.2015 Bulletin 2015/04**

(51) Int Cl.:
**G01S 13/86** (2006.01)          **G01S 13/92** (2006.01)
**G08G 1/017** (2006.01)

(21) Application number: **14168779.8**

(22) Date of filing: **19.05.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **22.05.2013 RU 2013123541**

(71) Applicant: **Barsky, Ilya Victorovich
194156 Saint-Petersburg (RU)**

(72) Inventor: **Barsky, Ilya Victorovich
194156 Saint-Petersburg (RU)**

(74) Representative: **Rupprecht, Kay et al
Meissner, Bolte & Partner GbR
Widenmayerstraße 47
80538 München (DE)**

(54) **Complex for videofixing and measuring speed and coordinates of vehicles**

(57)      The invention refers to the complexes for traffic regulation and control of the road transport and intended for detecting and videofixing offences of the traffic laws by vehicles including those for videofixing of overrunning vehicles. The complex for videofixing and measuring speed of movement and coordinates of vehicles is proposed which comprises radar, video camera including light-sensitive transducer and electronic unit, lens, control module arranged to control video camera and lens, processing unit connected to radar and video camera, as well as illumination unit. As distinct from the prototype, the radar is arranged to simultaneously measure speeds and coordinates of all vehicles in the control area of the video camera, processing unit is arranged to automatically identify the images of the registration plates received from the video camera simultaneously with the radar measuring wherein the control area of the video camera encompasses not less than four traffic lanes, and image of the registration plate comprises not less than N pixels over the width, where N is determined by the formula

$$N = \frac{U}{S} \ ,$$

where
U - geometric width of the registration plate;

S - geometric width of the lines with which the image of symbols on the registration plate is made.

In the preferred embodiment the dimensions of the light-sensitive transducer of the video camera, its resolution, focal length of the lens and distance to the object for photographing are selected proceeding from the ratio:

$$N => \frac{f \cdot U \cdot Q}{2m \cdot R} \ ,$$

where
f - focal length of the lens;
U - geometric width of the registration plate;
Q - transducer resolution over the horizontal;
R - distance to the object for photographing;
2m - width of the operating area of the transducer.

Technical result of providing the true identification of registration plates of the vehicles-offenders on the road with not less than four traffic lanes directly in the moment of measuring at minimum energy and computer expenses and minimum overall sizes of the complex is attained.

**EP 2 827 171 A1**

**(Cont. next page)**

Fig.1

**Description**

Field of the invention

The invention refers to the complexes for traffic regulation and control of the road transport and intended for detecting and videofixing offences of the traffic laws by vehicles including those for videofixing of overrunning vehicles.

Background of the invention

The photoradar complex "KRIS" is known which comes in stationary version [one can find the information in the Ethernet by address
http://www.simicon.ru/rus.product/gun/photoradar kris c.html] and
http://www.simicon.ru/rus.product/gun/photoradar kris p.html] in movable version. This complex presents radar with a narrow radiation pattern matched with TV-camera of PAL standard angle of sight of which coincides with the main lobe of the radar radiation pattern. Also, the structure includes IR-searchlight for night work and information processing unit. When a vehicle drives into the control area radar measures its speed and several frames are fixed by TV-camera, thereafter the state registration mark is identified and the most qualitative photo of the vehicle and the target data are registered in the log. A drawback of this complex is that it allows performing control of not more than two traffic lanes (if there is not more than one car on the traffic lanes in the moment of fixing), and in the standard version of the stationary arrangement (above the traffic lane) - not more than one traffic lane. Thus, to control the multilane way, erection of the expensive structure above the roadway and installation of the respective number of the photoradar sensors is required.
The photoradar complex "Speed Safety System" (SSS) of the company Sensys (http://www.sensys.se/web/Overview/aspx) is known which comprises radar, video unit and processing unit and illumination unit connected to them. Radar is arranged to simultaneously measure speed, range and azimuth of the vehicle. Video unit includes a video camera with the lens and a control module arranged to control video camera and the lens. Observing speed of the targets takes place up to range of 150 m. At the defined fixed distance convenient for receiving a high-quality photo (usually in the order of 40 m) on the so called "reference line" the image of the vehicle is fixed, and its photo together with the information about speed and position of the vehicle on the road is kept for subsequent identification of the registration plate. Use of the multipurpose radar allows measuring parameters of several targets simultaneously.
The drawbacks of this system can be the following:

1. This system uses a high resolution camera. With increase of resolution sensitivity decreases which leads to necessity of using a high-power flash. High resolution matrix requires the complicated expensive optics of high resolution either.
2. Processing of the image with a high resolution (and with a large field of view) requires the large computer resources thus high consumption, heat release which requires an effective heat removal. All these lead to increase of overall dimensions, weight and power consumed. Particularly, the description points out that for placing SSS equipment a special installation box with the built-in supply units and conditioner is used.
3. Use in the prototype of so called "reference line" on reaching of which a video camera receives an instruction from the radar for photographing. Description of the prototype points out that for identification the only photo received on the "reference line" is used. Use of the only photo for identification essentially increases requirements to the computer resources for identification. These requirements can be essentially decreased in using "collections" of the images of similar registration plates which are formed from the results of identification of the numbers when processing continuous video flow. Besides, use of the collections sharply increases reliability and probability of identification.
4. Photographing in one defined position ("reference line") increases the probability of receiving the frame on which the registration plate of the vehicle on the far lane is shielded by the vehicle on the near lane.
5. During the observation speed of the vehicle can vary and in the result moment of photographing on the "reference line" can not coincide with the moment when speed of the target was maximum one and over the permissible threshold. Thus, a part of offenders can be not found.

As a prototype of this utility model the photoradar complex "Strelka" was selected which uses "Method for determining speed and coordinates of vehicles with their sequential identification and automatic registration of offences of the traffic laws and device for implementation thereof" [RF patent of invention No. 2382416, published 20 of February 2010]. This photoradar complex comprises radar, video camera for identification of the state registration mark and control unit for data processing. Radar includes a signal processing module providing calculation of speed and range of all vehicles on the selected area of the road bed, and data from the panoramic view camera together with the radar data are used for receiving speeds and coordinates of the vehicles, their identification and data transfer for automatic registration of offences of the traffic laws.

This complex also allows controlling up to 4 traffic lanes simultaneously by means of high resolution video camera with wide-angle lens. Wherein installation of the complex does not require erection of the girder structures above the road, it is possible to install the complex at the post near the edge of the roadway.

Principle aspect of this device - measuring of speed and photographing (with identification of the registration plates) are always carried out in various time. Determination of the traffic lane on which a car moves is performed in the result of a video flow analysis received when photographing with a video camera. Determination of range and speed is performed with a pulse video locator. Thus, the system provides position finding of the car in the far region (at the distance of 300-500 m from the point of photographing). Photographing for identification of the registration plates takes place from the distance in the order of 50 m, i.e., essentially later after determination of the coordinates and speed of the car. Referencing of the moving vehicle detected at the large distance to its photo in close shot takes place by tracking the movement trajectory. Movement of the car from the far region where speed measuring is performed, but registration plate is not distinguishable, into the near region in which the registration plates are photographed and identified, is tracked by analysis of the video image received from the high resolution camera.

Thus, identification of the registration plates and correct assignment of the measured speed to the identified target is performed by the results of the computer analysis of the target image. In the prototype receiving of the quality target images on the multi-lane road is attained by use of high resolution TV-camera which inevitably leads to necessity of use of the powerful high-speed computer and super powerful flash for receiving the image on the TV-camera. According to the site materials http://td-str.ru/file.aspx?id=16233 general weight of the device exceeds 90 kg, volume - about 0,5 cubic meters, power consumed - about 1 KW.

Thus, the key problem of the decisions available in the present time is the technical contradiction between the necessity of receiving a high quality image and the tendency for decreasing the computer and energy resources (high speed, power, overall dimensions) required for its receiving and processing.

The object of this invention is to provide the complex for videofixing and measuring speed and coordinates of vehicle providing true identification of the registration plates of the vehicles-offenders on the road with not less than four lanes directly in the moment of measuring at minimum energy and computer expenses, minimum overall dimensions of the system.

Disclosure of the invention

To solve this problem, the complex for videofixing and measuring speed of movement and coordinates of vehicles is proposed which comprises radar, video camera including light-sensitive transducer and electronic unit, lens, control unit arranged to control video camera and lens, processing unit connected to radar and video camera, as well as illumination unit. As distinct from the prototype, the radar is arranged to simultaneously measure speeds and coordinates of the vehicle being in the control area of the video camera, processing unit is arranged to automatically identify the images of the registration plates received from the video camera simultaneously with the radar measuring wherein control area of the video camera encompasses not less than four traffic lanes, and image of the registration plate comprises not less than N pixels on the width, where N is determined by the formula

$$N = \frac{U}{S} \quad ,$$

where

U - geometric width of the registration plate;
S - geometric width of the lines with which the image of symbols on the registration plate is made.

In the preferred embodiment dimensions of the light-sensitive transducer of the video camera, its resolution, focal length of the lens and distance to the object for photographing are selected proceeding from the ratio:

$$N => \frac{f \cdot U \cdot Q}{2m \cdot R} \quad ,$$

where

f - focal length of the lens;
U - geometric width of the registration plate;
Q - sensor resolution on the horizontal;
R - distance to the object for photographing;
2m - width of the operating area of the sensor.

Preferably, the operating area of the light-sensitive transducer is a half of its common section, the other half of which is protected from light.

Preferably, the light-sensitive transducer has the identification area being of 0.4 to 0.8 of the operating area of the transducer depending on the dimensions and resolution of the light-sensitive transducer, lens characteristics and width of the controllable road.

Video camera can be arranged to provide observation of the vehicle on the run length L which is greater than the minimum possible run length $L_0$ of the vehicle in the control area required for automatic identification of the vehicle registration plate, where $L_0$ is determined by the formula:

$$L_0 = \frac{M \cdot V}{F} \; ,$$

where

M - quantity of the car photo images in the control area;
V - speed of the car, m/s;
F - frame frequency of the video camera, frame/s.

Preferably, the light-sensitive transducer is placed at an angle to its optical axis wherein a slope is calculated by the formula

$$\theta \approx \frac{f}{H} \cdot \cos \beta \; ,$$

where

$\Theta$ - angle between the normal to the plane of the light-sensitive transducer and optical axis of the lens, rad;
f - focal length of the lens;
H - height of the camera installation above the road;
$\beta$ - slope of the lens optical axis to the road plane.

Wherein the run length L of the car in the control area on the first (fourth) lane is determined by the expression

$$L = a \cdot \left[ tg\gamma + \frac{1}{tg(\gamma - \alpha)} \right] - \frac{d}{\cos \gamma} \; ,$$

In this expression <a> is determined from the condition of equality of the runs on the first $L_1$ and the fourth $L_2$ traffic lanes and constitutes:

$$a = \frac{\sin(\gamma - \alpha)}{2 \cdot \sin\gamma} \cdot \left[ (D + d) \cdot \sin(\gamma + \alpha) - W \cdot \cos\gamma \right],$$

where

$$D = \frac{H}{tg(\beta - \varphi)},$$

$$d = \frac{H}{tg(\beta + \varphi)},$$

$$tg\alpha = \frac{m \cdot tg(\beta + \varphi)}{f \cdot \sin\beta},$$

$$tg\varphi = \frac{n}{f},$$

$$W = w_p (n - 1),$$

$\gamma$ - angle between the projection of the lens optical axis on the road plane and direction of the vehicle movement,
2n - height of the operating area of the light-sensitive transducer,
$w_p$ - width of one traffic lane on the road,
n - quantity of the lanes on the roadway.

Preferably video camera is installed to adjust its slopes, roll and rotation.
The light-sensitive transducer of the video camera preferably arranged to adjust amplification level for its various regions depending on the difference of the control area illumination.
The radar can be installed at an angle to the optical axis of the video camera lens.
The complex can be additionally comprises an illuminator for protection the lens from contaminations.
Preferably the illumination unit comprises the main infra-red searchlight synchronized with the video camera.
The main infra-red searchlight preferably comprises a plurality of narrow-directed searchlights sum of radiation patterns of which constitutes the radiation pattern of the main searchlight.
In the preferable embodiment the main infra-red searchlight is installed to provide a uniform illumination of the control area.
In the preferable embodiment the complex is additionally provided with the multifunctional liquid-crystal display to adjust the camera position and to control the complex parameters.
The complex also can be additionally provided with the user interface to adjust the camera position.
The technical result is to provide the possibility of determining the movement parameters (speed and coordinates) of the vehicles with simultaneous identification of the registration plates for all the vehicles in the control area on the road with not less than four traffic lanes.
Selection of the complex parameters according to the proposed analytical expressions allows increasing the truth of identification in decreasing consumed energy, computer resources and overall dimensions.

Brief description of the drawings

Fig.1 shows the block diagram of the complex for videofixing and measuring speed and coordinates of vehicles.
Fig.2 shows the general front view of the complex for videofixing and measuring speed and coordinates of vehicles.
Fig.3 shows the general rear view of the complex for videofixing and measuring speed and coordinates of vehicles.
Fig.4 shows rear view of the complex on the side of the liquid crystal display with tuning interface.
Fig.5 shows the built-in infra-red searchlight.
Fig.6 shows the complex attached to the support.
Fig.7 shows a schematic view of the control area on the four-lane road.
Fig. 8 shows the radiation pattern of the infra-red searchlight.
Fig.9 shows the specimen of the cars' photos received by the complex for videofixing and measuring speed and coordinates of vehicles.

Implementation of the invention

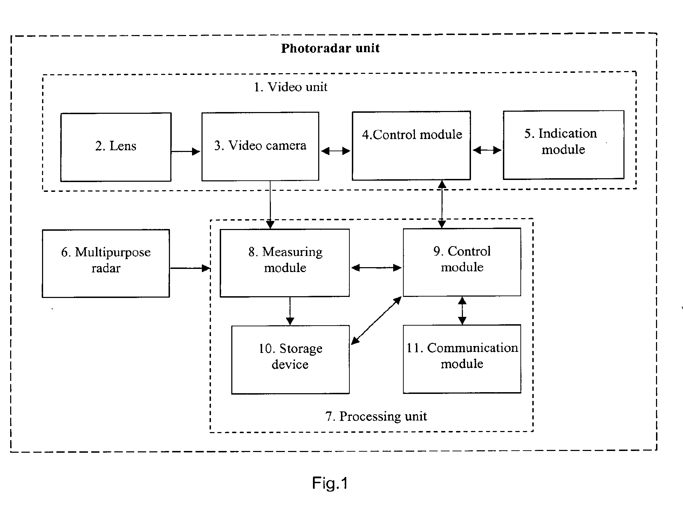

The complex in Fig.1 consists of the video unit 1 which includes a wide-angle lens 2, high-resolution video camera 3, control module 4 and indication module 5 of the multipurpose radar 6 and processing unit 7 with software for processing the received information, identification of the state registration marks and forming photo frames with measured speeds and registration plates. Field of view of the video camera 3 is matched with the control area of the radar 6. Video camera 3 and radar 6 are interconnected with the processing unit 7. The processing unit 7 includes the measuring module 8, interconnected with it control module 9 and storage device 10 and communication module 11 interconnected with the control module 9.

Operation of the radar 6 is based on the principle of phase bearing. Radar includes a transmitter, not less than two receivers and module for digital processing of signals. Transmitter generates a combined signal combining linear frequency modulation and frequency manipulation due to which combination of high accuracy and speed of the target parameters' measurement (range, speed) is provided in the digital processing module. Receivers receive a reflected signal; digital processing module determines direction to a target by phase difference between the signals from various receivers. All data in already processed form are continuously transmitted to the measuring module of the complex.

Thus, the radar data allows determining all parameters of every target movement in the control area.

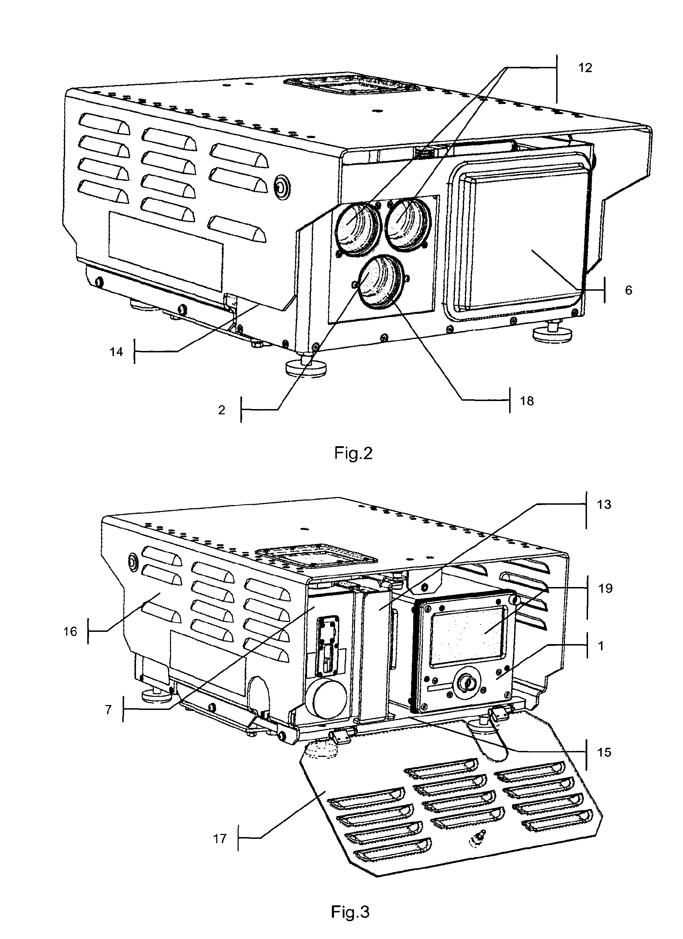

Fig. 2-4 show a general view of the complex for videofixing and measuring speed and coordinates of vehicles. The complex includes video unit 1 with built-in infra-red searchlights 12, multipurpose radar 6, processing unit 7, as well as a climate-control module 13. Each of the units is placed in a separate pressurized body and all of them are arranged in the case 14 consisting of the common base 15, folding protection visor 16 and folding cover 17. Units are mounted on the base 12 equipped with connectors for their commutation, and are closed with the protection visor 16 from above. The case has all-weather construction. The built-in infra-red searchlights 12 are synchronized with video camera 3 and are able to provide a visual readability and automatic identification of the standard marks of the state registration during twenty-four hours.

The video unit 1 is protected with a transparent illuminator 18 (Fig.2) through which observation of the road is performed. Degree of the illuminator transparency essentially depends on the image quality, and therefore on the required level of illumination and on the resources required for processing the images. Thus, keeping up the preset transparency of the illuminator is the important factor of the device resources saving. To keep cleanliness of the illuminator the device is equipped with the means for controlling its transparency as well. Particularly, for controlling transparency inside the device in close proximity to internal surface of the illuminator optocouple (light diode - photo diode) is mounted in such a way that reflected light from the light diode falls on the photo diode only in the case if the illuminator is contaminated. Analyzing the level of reflections one can determine the degree of the illuminator contamination, which allows generating a signal for increasing the illumination power.

Video unit can be equipped with the built-in resistive sensor display intended for tuning and orienting the complex while installing. Using of the personal computer to tune the complex is not required. Display is equipped with the preliminary heating providing the possibility of functioning at negative temperatures.

Also, the complex includes a device for reading-writing memory cards of SD/SDHC type. Data of targets including two photo of offender, identified number, recorded speed of the vehicle, mark about a travel on the public transport lane, direction of travel, data and time of offence, value of the admissible speed on that road part, name of the controlled road part, geographical coordinates, serial number of sensor is recorded on the memory card. Memory card SD and SIM-card are protected by the hermetically sealed cover, fast exchange of the cards is provided.

Also, the complex comprises a built-in navigation module GPS/GLONASS providing position finding of the complex. Geographic coordinates of the complex are included in the decree of the administrative infringement.

The climate-control module 13 serves to provide operation of the complex within a wide temperature range. Distant monitoring of state of the external cooling system is provided to prevent failures.

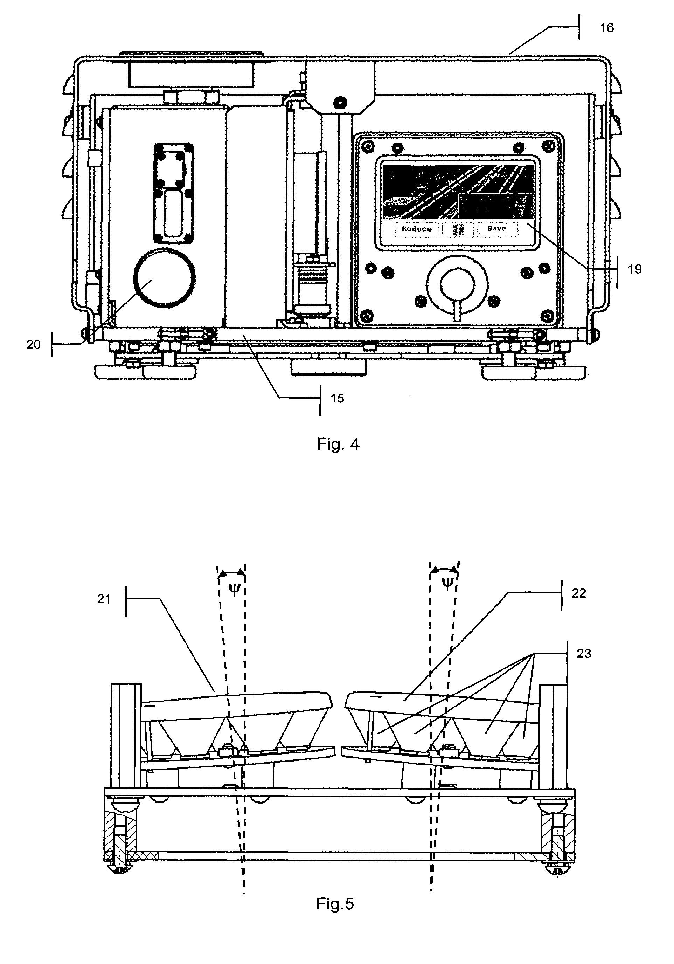

The illumination unit (Fig.5) comprises the infra-red searchlight 12 consisting of several (in the particular example - of two) narrow-directed searchlights 21, 22 on the base of IR-light diodes 23 sum of radiation patterns of which constitutes the radiation pattern of the searchlight. The illumination unit is able to provide a visual readability and automatic identification of the standard marks of the state registration during twenty-four hours.

The complex is equipped with a high-speed diagnostic communication channel to perform remote technical support by the manufacturer (including the possibility of remote regenerating the built-in software complex).

In the complex there is provided support of data transfer both by wire communication channel (Ethernet), and by the guarded wireless channels (VPN-channel via 3G, Wi-Fi). Besides that, there is provided for the possibility of supply both from the battery box with a standard lead-acid cell, and from the mains 220 V.

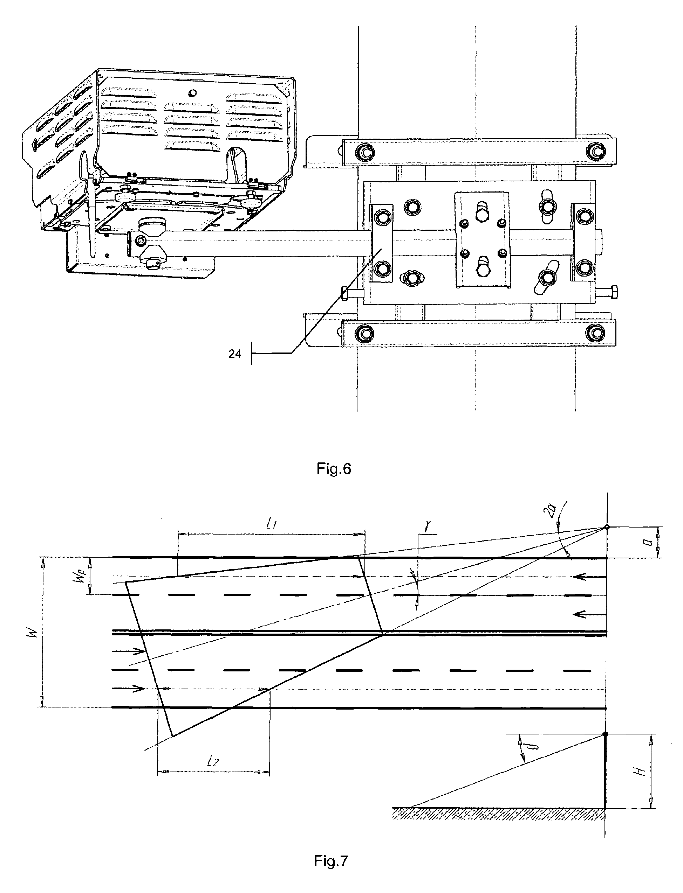

The complex is mounted on the rotating apparatus 24 (Fig.6) providing its attachment and required orientation relative to the road. Also in the registered complex there is provided compatibility with already used attaching systems of the photo radar complexes.

Parameters of the video unit in a key manner influence on the required hardware-software resources and (economical) efficiency of the system in a whole, i.e. just in the video module forming and initial processing of the received image occur.

Expressions for calculation of the technically feasible constraints are given below consideration of which when designing allows on the one hand providing the confident identification and vehicle control on the 4-lane road, and on the other hand allows not permitting the surplus of the resources in the general construction of the system.

For automatic identification image of the registration plate should comprise not less than N pixels on the width, where N is determined by the formula

$$N = \frac{U}{S} \quad ,$$

where

U - geometric width of the registration plate;
S - geometric width of the lines with which the image of symbols on the registration plate is made.

Video camera comprises a light-sensitive transducer wherein dimensions of the transducer, its resolution, focal length of the lens and distance to the object for photographing are selected proceeding from the ratio:

$$N => \frac{f \cdot U \cdot Q}{2m \cdot R} \quad ,$$

where

f - focal length of the lens;
U - geometric width of the registration plate;
Q - transducer resolution on the horizontal;
R - distance to the object for photographing;
2m - width of the operating area of the sensor.

Such selection of the parameters allows providing the possibility of video observation of the 4-lane road with the possibility of simultaneous control of all vehicles moving along it. For true identification of the registration plate of the vehicle, frame frequency provided by the camera should be selected from the condition of receiving such run length L of the vehicle in the control area that $L > L_0$, where $L_0$ is determined by the formula:

$$L_0 = \frac{M \cdot V}{F} \, ,$$

where

M - quantity of the vehicle photo images in the control area;
V - speed of the car, m/sec;
F - frame frequency of the video camera, frame/sec.

Since the camera is placed under slope relative to the road plane then for increasing the image sharpness light-sensitive transducer of the video camera also is placed under slope relative to the optical axis, wherein the slope is calculated by the formula:

$$\theta \approx \frac{f}{H} \cdot \cos\beta \, ,$$

where

$\Theta$ - angle between the normal to the plane of the light-sensitive transducer and the optical axis of the lens, rad;
f - focal length of the lens;
H - height of the camera installation above the road;
$\beta$ - slope of the optical axis of the lens to the road plane.

Wherein the run length of the car in the control area (Fig.7) on the first $L_1$ (fourth $L_2$) traffic lane is determined by the expression

$$L = a \cdot \left[ tg\gamma + \frac{1}{tg(\gamma - \alpha)} \right] - \frac{d}{\cos\gamma} \, ,$$

In this expression <a> is determined from the condition of equality of the runs on the first $L_1$ and on the fourth $L_2$ traffic lanes and constitutes:

$$a = \frac{\sin(\gamma - \alpha)}{2 \cdot \sin\gamma} \cdot \left[ (D + d) \cdot \sin(\gamma + \alpha) - W \cdot \cos\gamma \right] ,$$

where

$$D = \frac{H}{tg(\beta - \varphi)} \, ,$$

$$d = \frac{H}{tg(\beta + \varphi)} \ ,$$

$$tg\alpha = \frac{m \cdot tg(\beta + \varphi)}{f \cdot \sin\beta} \ ,$$

$$tg\varphi = \frac{n}{f} \ ,$$

$$W = w_p(n - 1) \ ,$$

$\gamma$ - angle between the projection of the lens optical axis on the road plane and direction of the vehicle movement,
2n - height of the operating area of the light-sensitive transducer,
$w_p$ - width of one traffic lane on the road,
n - quantity of the lanes on the roadway.

Selection of the parameters of the light-sensitive matrix, focal length of the lens, frame frequency and other characteristics of the video system according to the given expressions allows providing the simultaneous control of the vehicle on the 4-lane road at minimum required hardware and software resources.

Additional possibility of increasing the image quality without increasing the hardware and software resources is realized in the device at the expense of the separate control of the amplification level over the lines of the light-sensitive transducer. This control allows creating the adaptive system, driving on the really existing illumination difference of the control area both in the day and in the night. Particularly, in the upper area of the light-sensitive matrix (corresponding to the near region of the control area) amplification may be set the smaller than in the lower region to compensate for the natural illumination difference created by the IR-searchlight on the road.

The searchlight 12 consisting of a several IR-light diodes 23 (Fig.5) is switched on strictly synchronous with the video camera providing the brightening of the control area exactly in those moments when the video camera shutter has operated. Duration of the searchlight is set proceeding from duration of the camera exposure and adjusted depending on the image quality.

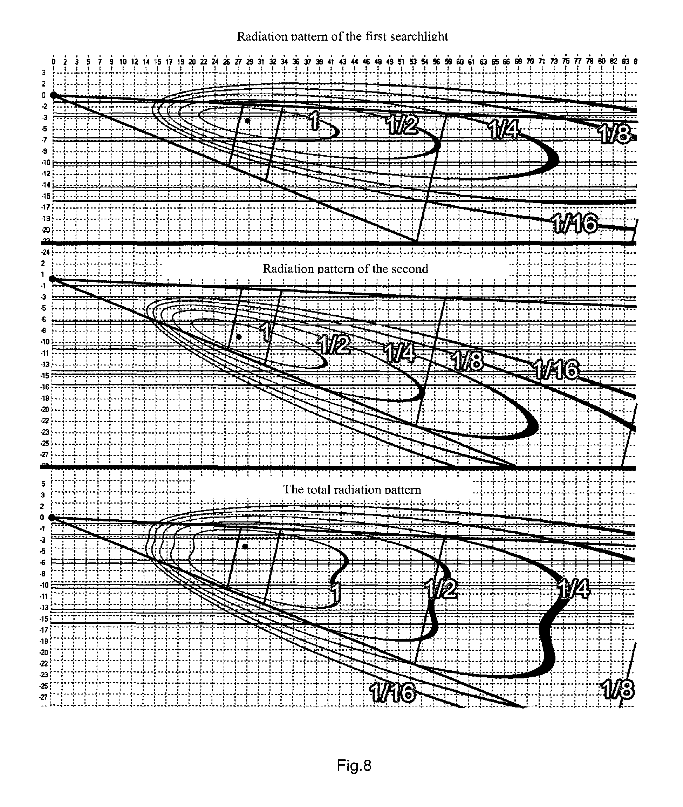

Uniformity of illumination of the control area also has an essential influence on the image quality. Therefore the special measures for its provision are taken in the construction of the IR-searchlight. Particularly, the searchlight is made from several narrow-directed searchlights (in particular version - two narrow-directed searchlights 21, 22, Fig.5, - width of the pattern of each searchlight is 10 degrees), wherein they are placed so that angle 2Ψ between their optical axes in the horizontal plane constitutes the half of the radiation pattern width, i.e., 2Ψ=10 degrees, and in the vertical plane - 0. In the result, in the particular version, when using two narrow-directed searchlights the total radiation pattern of the searchlight has width of 20 degrees in azimuth and 10 degrees in elevation (Fig.8 - radiation pattern of IR-searchlight). Thus, firstly, uniform illumination of the control area is provided, and secondly, the searchlight resources are not spent for illumination of that area of the road which is out of the view area of the camera.

To control correctness of the device installation, its initial tuning and regulation, the device has as its component the liquid-crystal touch display 19 (Fig. 3, 4), showing the controllable section of the road, wherein the device is mounted on the rotating apparatus 24 providing the possibility of fine adjustment of angles of installation and fixing of the device position by the road (Fig.6).

Also the display 19 shows a special adjusting interface (Fig.4) allowing the operator to calculate position of the markers which should be placed on the road for corrected installation of the device. Then adjustment of the device position is performed according to these markers. Interface on the display also allows the operator to adjust the main parameters of the device (arrangement and boundaries of the traffic lanes on the road, thresholds of speed etc.).

The complex in Fig.1 operates as follows. The multipurpose radar 6 continuously transmits data of all the targets in the control area: speed, distance, azimuth to the measurement module 8. Video camera 3 with a wide-angle lens 2 matched with the control area of the radar 6, transfers video material to the measurement module 8 in which images of the vehicles are combined with the data obtained from the radar 6, thus fixing of the targets is carried out. Then the measurement module 8 performs identification of the state registration marks of the moving vehicles, detects the offenders, and forms images and stores data of the offenders in the log at the storage device 10. Data of the fixed targets also can be sent to the external devices via the communication module 11 supporting various technologies of wire and wireless data transfer.

Control of these processes is carried out by the control module 9 of the processor unit 7. The control module 4 of the video unit 1 controls operation of the video camera 3, receives the user instructions, interacts with him via the indication module 5 with the respective interface.

Modular construction of the complex provides a high maintainability and the possibility of modernization.

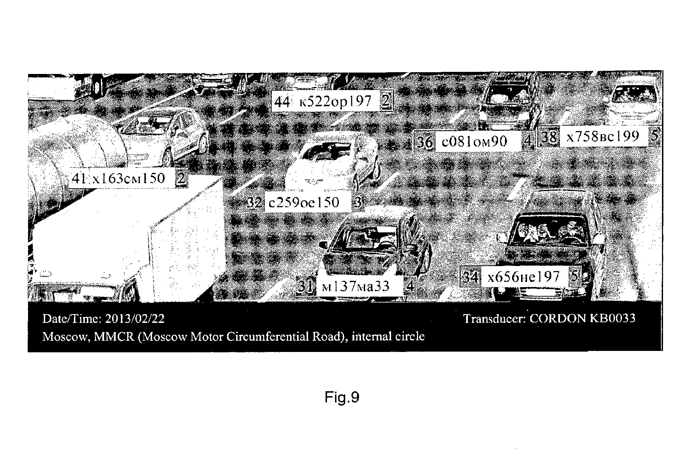

Complex automatically measures speed of all the vehicles in the control area (Fig. 9) and keeps two photos of every offender: long shot (group photo of the whole control area with selection of given offender) and close shot (photo of the offender with visually distinguished registration plate). Complex is intended for operating in stationary arrangement at height of 1 to 10 meters above the roadway level.

Thus, the registered complex for videofixing and measuring speed of movement and coordinates of the vehicles provides true identification of registration plates of the vehicles-offenders on the road with not less than four traffic lanes directly in the moment of measuring at minimum energy and computer expenses and minimum overall sizes of the complex.


**Claims**

1. The complex for videofixing and measuring speed of movement and coordinates of vehicles comprising

   - radar,
   - video camera including light-sensitive transducer, lens, control unit arranged to control video camera and lens,
   - processing unit connected to radar and video camera, as well as illumination unit, **characterized in that** the radar is arranged to simultaneously measure speeds and coordinates of the vehicles in the control area of the video camera, processing unit is arranged to automatically identify the images of the registration plates received from the video camera simultaneously with the radar measuring wherein control area of the video camera encompasses not less than four traffic lanes, and image of the registration plate comprises not less than N pixels on the width, where N is determined by the formula

$$N = \frac{U}{S} \quad ,$$

   where

   U - geometric width of the registration plate;
   S - geometric width of the lines with which the image of symbols on the registration plate is made.

2. The complex according to claim 1 **characterized in that** the dimensions of light-sensitive transducer of the video camera, its resolution, focal length of the lens and distance to the object for photographing are selected proceeding from the ratio:

$$N => \frac{f \cdot U \cdot Q}{2m \cdot R} ,$$

   where

f - focal length of the lens;
U - geometric width of the registration plate;
Q -resolution of the light-sensitive transducer on the horizontal;
R - distance to the object for photographing;
2m - width of the operating area of the transducer.

3. The complex according to claim 1 **characterized in that** the operating area of the light-sensitive transducer is a half of its common section, the other half of which is protected from light.

4. The complex according to claim 3 **characterized in that** the light-sensitive transducer has the identification area being of 0.4 to 0.8 of the operating area of the sensor depending on the dimensions and resolution of the light-sensitive transducer, lens characteristics and width of the controllable road.

5. The complex according to claim 1 **characterized in that** the video camera can be arranged to provide observation of the vehicle on the run length L which is greater the minimum possible run length $L_0$ of the vehicle in the control area required for automatic identification of the vehicle registration plate, where $L_0$ is determined by the formula:

$$L_0 = \frac{M \cdot V}{F} \ ,$$

where

M- quantity of the vehicle photo images in the control area;
V - speed of the vehicle, m/s;
F - frame frequency of the video camera, frame/s.

6. The complex according to claim 1 **characterized in that** the light-sensitive transducer is placed at an angle to its optical axis wherein a slope is calculated by the formula

$$\theta \approx \frac{f}{H} \cdot \cos \beta \ ,$$

where

$\Theta$ - angle between the normal the plane of the light-sensitive transducer and optical axis of the lens, rad;
f - focal length of the lens;
H - height of the camera installation above the road;
$\beta$ - slope of the lens optical axis to the road plane.

7. The complex according to claim 1 **characterized in that** the video camera is arranged to adjust angles of its slope, roll and rotation, wherein run length L of the vehicle in the control area is determined by the expression

$$L = a \cdot \left[ tg\gamma + \frac{1}{tg(\gamma - \alpha)} \right] - \frac{d}{\cos \gamma} \ ,$$

In this expression <a> is calculated from the condition of equality of the runs on the first and the fourth traffic lanes and determined by the expression:

$$a = \frac{\sin(\gamma - \alpha)}{2 \cdot \sin \gamma} \cdot \left[ (D + d) \cdot \sin(\gamma + \alpha) - W \cdot \cos \gamma \right],$$

where

$$D = \frac{H}{tg(\beta - \varphi)},$$

$$d = \frac{H}{tg(\beta + \varphi)},$$

$$tg\alpha = \frac{m \cdot tg(\beta + \varphi)}{f \cdot \sin \beta},$$

$$tg\varphi = \frac{n}{f},$$

$$W = w_p (n - 1),$$

$\gamma$ - angle between the projection of the lens optical axis on the road plane and direction of the vehicle movement,
2n - height of the operating area of the light-sensitive transducer,
$w_p$ - width of one traffic lane on the road,
n - quantity of the lanes on the roadway.

8. The complex according to claim 1 **characterized in that** the light-sensitive transducer of the video camera arranged to adjust amplification level for its various regions depending on the difference of the control area illumination.

9. The complex according to claim 1 **characterized in that** the radar is installed at an angle to the optical axis of the video camera lens.

10. The complex according to claim 1 **characterized in that** it additionally comprises an illuminator for protecting the lens from contaminations.

11. The complex according to claim 1 **characterized in that** the illumination unit comprises the infra-red searchlight synchronized with the video camera.

12. The complex according to claim 11 **characterized in that** the infra-red searchlight comprises a plurality of narrow-directed searchlights sum of radiation patterns of which constitutes the radiation pattern of the main searchlight.

13. The complex according to claim 1 **characterized in that** the infra-red searchlight is installed to provide uniform illumination of the control area.

14. The Complex according to claim 1 **characterized in that** it is additionally provided with the multifunctional liquid-crystal display to adjust the camera position and to control the complex parameters.

15. The complex according to claim 1 **characterized in that** it is additionally provided with the user interface to adjust the camera position.

**Photoradar unit**

1. Video unit

| 2. Lens | 3. Video camera | 4. Control module | 5. Indication module |

6. Multipurpose radar

8. Measuring module

9. Control module

10. Storage device

11. Communication module

7. Processing unit

Fig.1

Fig.2

Fig.3

Fig. 4

Fig.5

Fig.6

Fig.7

Radiation pattern of the first searchlight

Radiation pattern of the second

The total radiation pattern

Fig.8

Fig.9

**Europäisches Patentamt**
**European Patent Office**
**Office européen des brevets**

# EUROPEAN SEARCH REPORT

Application Number

EP 14 16 8779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Peak Gain Systems: "MULTI-TARGET PHOTO RADAR SYSTEM", 7 February 2012 (2012-02-07), XP055157267, Retrieved from the Internet: URL:http://www.peakgainsystems.com/PDF/Cordon_Full_Opt_EN.pdf [retrieved on 2014-12-08] * the whole document * | 1-15 | INV. G01S13/86 G01S13/92 G08G1/017 |
| X | Anonymous: "ITS International - Advanced automatic speed detection technology from SIMICON", 29 March 2012 (2012-03-29), XP055157262, Retrieved from the Internet: URL:http://www.itsinternational.com/event-news/intertraffic-2012/advanced-automatic-speed-detection-technology-from-simicon/ [retrieved on 2014-12-08] * the whole document * | 1-15 | |
| X | EP 1 990 655 A1 (ROBOT VISUAL SYSTEMS GMBH [DE]) 12 November 2008 (2008-11-12) * the whole document * | 1-15 | TECHNICAL FIELDS SEARCHED (IPC) G01S G08G |
| A | "Russian Super Speed Traffic Camera - Simicon Cordon - Peak Gain Systems", 3 July 2012 (2012-07-03), XP055157268, Retrieved from the Internet: URL:http://www.viewtech.ca/russian_super_speed_traffic_camera.htm [retrieved on 2014-12-08] * the whole document * | 1-15 | |

-/--

The present search report has been drawn up for all claims

| Place of search | Date of completion of the search | Examiner |
|---|---|---|
| Munich | 11 December 2014 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 14 16 8779

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SIMICONTV: "Multi-target photo radar system CORDON working in both directions", , 28 March 2012 (2012-03-28), XP054975635, Retrieved from the Internet: URL:https://www.youtube.com/watch?v=EI1L1A 2tSxs [retrieved on 2014-12-09] * the whole document * | 1-15 | |
| A | Simicon: "Simicon ¦ Facebook", , 20 March 2012 (2012-03-20), XP055157259, Retrieved from the Internet: URL:https://www.facebook.com/SimiconCom/ph otos/a.372158719483647.92800.3721034461558 41/372158722816980/?type=1&theater [retrieved on 2014-12-08] * the whole document * | 1-15 | |
| A | DE 10 2009 043742 A1 (JENOPTIK ROBOT GMBH [DE]) 14 April 2011 (2011-04-14) * the whole document * | 1-15 | TECHNICAL FIELDS SEARCHED (IPC) |
| A | DE 10 2010 056405 A1 (JENOPTIK ROBOT GMBH [DE]) 28 June 2012 (2012-06-28) * the whole document * | 1-15 | |
| A | US 2006/047371 A1 (JANSSEN THEODORUS M [NL] JANSSEN THEODORUS MARIA [NL]) 2 March 2006 (2006-03-02) * the whole document * | 1-15 | |

The present search report has been drawn up for all claims

| Place of search | Date of completion of the search | Examiner |
|---|---|---|
| Munich | 11 December 2014 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 16 8779

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2014

| Patent document cited in search report | | Publication date | Patent family member(s) | | Publication date |
|---|---|---|---|---|---|
| EP 1990655 | A1 | 12-11-2008 | AU 2008202015 A1<br>DE 102007022373 A1<br>EP 1990655 A1<br>US 2008278365 A1 | | 27-11-2008<br>13-11-2008<br>12-11-2008<br>13-11-2008 |
| DE 102009043742 A1 | | 14-04-2011 | AU 2010302705 A1<br>DE 102009043742 A1<br>EP 2483882 A1<br>WO 2011038729 A1 | | 26-04-2012<br>14-04-2011<br>08-08-2012<br>07-04-2011 |
| DE 102010056405 A1 | | 28-06-2012 | DE 102010056405 A1<br>EP 2656105 A1<br>WO 2012089206 A1 | | 28-06-2012<br>30-10-2013<br>05-07-2012 |
| US 2006047371 A1 | | 02-03-2006 | AU 2003224504 A1<br>EP 1497805 A2<br>NL 1020386 C2<br>US 2006047371 A1<br>WO 03088177 A2 | | 27-10-2003<br>19-01-2005<br>17-10-2003<br>02-03-2006<br>23-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2382416 A